# EUROPÄISCHE PATENTSCHRIFT

(11) **EP 2 997 863 B1**
(45) Veröffentlichungstag und Bekanntmachung des Hinweises auf die Patenterteilung: **21.03.2018**
(21) Anmeldenummer: 15184434.7
(22) Anmeldetag: 09.09.2015
(51) Int. Cl.: A61G 21/00, A61G 17/007, A47H 23/10, B60J 1/20, A47H 23/02

(54) **GARDINENTRÄGER EINES BESTATTUNGSFAHRZEUGS**
CURTAIN HOLDER OF A BURIAL VEHICLE
SUPPORT DE RIDEAU POUR UN CORBILLARD

(30) Priorität: 22.09.2014 DE 102014113633; 09.03.2015 DE 202015101165 U
(43) Veröffentlichungstag der Anmeldung: 23.03.2016
(73) Patentinhaber: Schmidt, Udo, 48734 Reken (DE)
(72) Erfinder: Schmidt, Udo, 48734 Reken (DE)
(74) Vertreter: Habbel, Ludwig

(56) Entgegenhaltungen:
- DE-U1-202013 105 897
- US-A- 2 269 739

## Beschreibung

Die Erfindung betrifft einen Gardinenträger nach dem Oberbegriff des Anspruchs 1.

Aus der US 2 269 739 A, die den nächstkommenden Stand der Technik darstellt, ist ein derartiger Gardinenträger bekannt. Auf einer Grundplatte sind mehrere einzelne Bleche befestigt, die jeweils profiliert sind und gebogen verlaufen, so dass jedes einzelne Blech eine Falte des darzustellenden Faltenwurfs bildet. Auf ihrer Sichtseite sind diese blechernen Falten mit einer textilen Bespannung versehen. Der gattungsgemäße Gardinenträger ermöglicht eine Formstabilität des Faltenwurfs, so dass ein häufiges, zeitaufwändiges Arrangieren der Falten vermieden werden kann.

Viele Bestattungsfahrzeuge weisen im Sargraum hinter der Fahrerkabine große seitliche Fenster auf. Um eine Sicht in den Innenraum bei Kondolenzfahrten zu ermöglichen, beispielsweise auf den Sarg und auf Blumenschmuck, sind diese Fenster vorteilhaft. Für so genannte Überführungs- oder Transportfahrten hingegen ist ein derartiger Einblick in das Innere des Bestattungsfahrzeugs nicht erforderlich und häufig nicht erwünscht. Aus diesem Grund ist es bekannt, einen Einblick durch die Fenster zu verhindern, beispielsweise indem ein Rollo im Fahrzeuginneren montiert ist, welches wahlweise hochgezogen oder herabgelassen werden kann.

Ein gattungsfremder Gardinenträger ist aus der DE 20 2013 105 897 U1 bekannt: Dabei ist ein formstabiler Träger, beispielsweise in Form einer Holzplatte, vorgesehen, auf dem eine Gardine als so genannte Sichtblende fest angebracht ist. Diese Gardine besteht typischerweise aus Stoff. Sie ist in Falten gelegt und mit diesem Faltenwurf auf dem Träger befestigt, beispielsweise geklebt oder getackert. Dabei sind unterschiedliche branchenübliche Faltenwürfe der Gardine bekannt, beispielsweise in Form paralleler Streifen oder in Form eines so genannten Sonnenmotivs mit Falten, die sich radial von einem unteren Teilkreis zur Seite und nach oben erstrecken.

Die Herstellung der gattungsfremden Gardinenträger ist durch die Handhabung des Stoffs vergleichsweise zeitaufwendig und damit in Abhängigkeit von den jeweiligen Lohnkosten teuer. Die gattungsfremden Rollos stellen eine preisgünstige Alternative dar, die jedoch optisch keineswegs gleichwertig ist, weil die ebene, bedruckte Fläche des Rollos, selbst wenn sie mit einer Darstellung eines Faltenwurfs bedruckt sein sollte, je nach den herrschenden Lichtverhältnissen, je nach Ausrichtung des Fahrzeugs zur Sonne und somit je nach dem tatsächlichen Schattenwurf stets gleichbleibend aussieht und damit in der Mehrzahl der Fälle deutlich "unecht" wirkt.

Aus der DE 20 2012 102 758 U1 ist es bekannt, bei dem Innenausbau eines Bestattungsfahrzeugs insbesondere solche Oberflächenanteile mit einer Beflockung zu versehen, die zunächst nicht sichtbar sind, sondern beispielsweise nach Öffnung eines Deckels oder einer Klappe sichtbar werden. Dieser Beflockung wird als wirtschaftlich vorteilhafte Alternative zur Verwendung einer Oberflächenverkleidung vorgeschlagen, die ansonsten auch aus Kunstleder oder einem Holzfurnier bestehen könnte.

Der Erfindung liegt die Aufgabe zugrunde, einen gattungsgemäßen Gardinenträger dahingehend zu verbessern, dass dieser eine hochwertige Optik bei möglichst geringen Herstellungskosten ermöglicht.

Diese Aufgabe wird durch einen Gardinenträger mit den Merkmalen des Anspruchs 1 gelöst. Vorteilhafte Ausgestaltungen sind in den Unteransprüchen beschrieben.

Die Erfindung schlägt mit anderen Worten vor, die Sichtfläche des Gardinenträgers zu profilieren. Damit ist nicht ein beispielsweise gebogener Verlauf gemeint, der sich der Fahrzeugkontur und somit ggf. dem Verlauf des Fensters anpasst, wenn dieses beispielsweise bis in den Dachbereich des Fahrzeugs hinein und somit kurvig verläuft. Die vorschlagsgemäße Profilierung ist vielmehr an den dargestellten Faltenwurf angepasst und entspricht dem Faltenwurf in der Art, dass sich auch ohne eine Oberflächenschicht, allein aufgrund der dreidimensionalen Profilierung, bereits die typische Optik des gewünschten Faltenwurfs aufgrund der Licht- und Schattenwirkung ergibt. Dieser dreidimensional profilierte Träger ist mit der Oberflächenschicht versehen, welche die optische Wirkung des Gardinenträgers noch weiter verbessern kann. Dabei ist vorschlagsgemäß vorgesehen, als Träger eine Platte zu verwenden, deren die Sichtseite bildende Oberfläche die gewünschte Profilierung aufweist. Im Vergleich dazu, die Sichtseite des Gardinenträgers aus mehreren einzelnen Teil-Trägern zusammenzusetzen, wird eine erheblich wirtschaftlichere Herstellung des Gardinenträgers ermöglicht.

Die Oberflächenschicht kann beispielsweise aus einem textilen Werkstoff bestehen, der auf die Sichtseite des Trägers aufgezogen ist, beispielsweise aufgeklebt ist, damit dieses textile Material auch in die Mulden der Profilierung hinein verläuft. Insbesondere wenn dabei ein textiles Material verwendet wird, welches einen Anteil an dehnbaren Fasern aufweist, kann ohne eine zusätzliche, eigene Faltenbildung dieses Textilmaterials selbst das Textilmaterial faltenfrei auf die profilierte Sichtfläche des Trägers aufgebracht werden, so dass die dargestellten Falten lediglich die bewusst vorgesehenen, durch die Profilierung des Trägers bewirkten Falten sind, die in der Gardine sichtbar sind.

Die Gardine kann abweichend von dem beschriebenen Beispiel eines tatsächlich textilen Werkstoffs auch durch andere Materialien gebildet sein. Beispielsweise kann eine Lackierung der Sichtseite vorgesehen sein. Der Lack, insbesondere wenn es sich dabei um einen Mattlack oder einen Strukturlack mit einer Oberflächenrauhigkeit handelt, kann eine textilartige optische Anmutung bewirken, die insbesondere durch den optischen Eindruck der vermeintlichen Faltenbildung, nämlich durch die profilierte Sichtfläche des Trägers, unterstützt wird.

Besonders vorteilhaft kann die Oberflächenschicht durch eine Beflockung gebildet sein. Hierdurch ergibt sich eine samtartige Oberfläche, die, insbesondere wenn sie von außen durch das Fenster gesehen wird, tatsächlich einen stark textilen Eindruck vermittelt und somit dem optischen Erscheinungsbild einer tatsächlich textilen Gardine sehr nahe kommt.

Ein Vorteil der Beflockung, die eine bevorzugte Ausführungsform für die zum Fenster gerichtete Oberflächenschicht darstellt, liegt darin, dass mit geringem Aufwand eine Beschichtung einer nahezu beliebig geformten Oberfläche erfolgen kann. Wenn die Oberflächenschicht durch ein textiles Material gebildet ist, muss dieses üblicherweise mit einem erheblichen Arbeitsaufwand um den Träger herum gespannt und dann fixiert werden. Demgegenüber kann bei einer Beflockung besonders einfach und auf besonders wirtschaftliche Weise eine Beschichtung auch der umlaufenden Kante des Trägers erfolgen. Daher kann besonders vorteilhaft vorgesehen sein, dass sich die Beflockung auch über die Kante des Trägers erstreckt, so dass eine optisch ansehnliche Ausgestaltung der umlaufenden Kante ermöglicht wird, ohne hierzu beispielsweise ein separates Kantenband verwenden zu müssen. So kann nicht nur ein erhöhter Arbeitsaufwand vermieden werden, wie er beispielsweise beim Spannen eines textilen Materials um diese umlaufende Kante herum erforderlich wäre, sondern auch die Verwendung von zusätzlichem Material wie dem erwähnten Kantenband ist nicht erforderlich.

Vorteilhaft kann der Träger aus einem Schaumwerkstoff bestehen, insbesondere aus einem geschäumten Kunststoff. Geringes Gewicht und eine problemlose Verarbeitung, beispielsweise das Zuschneiden in Anpassung an unterschiedliche Fenstergeometrien, werden je nach dem verwendeten Werkstoff verbunden mit einer hohen Beständigkeit gegen Witterungseinflüsse, beispielsweise Feuchtigkeit.

Dabei kann vorteilhaft vorgesehen sein, einen Hartschaum als Schaumwerkstoff zu verwenden und den Träger aus einem Halbzeug herzustellen, nämlich aus einer Hartschaumplatte. Derartige Hartschaumplatten sind als Halbzeug handelsüblich und dementsprechend kostengünstig, verglichen beispielsweise mit der Herstellung eines speziellen, an die jeweilige Fenstergeometrie angepassten Formkörpers in einer eigens dafür vorgesehenen Form.

Die Profilierung der Sichtseite des Trägers kann auf unterschiedliche, dem Fachmann geläufige Arten erfolgen. Beispielsweise kann der Träger in einer Form erzeugt werden, in welcher eine Formwand die gewünschte Profilierung aufweist. Bei der Verwendung von Halbzeugen, beispielsweise Platten, kann die Profilierung der Oberseite beispielsweise durch Fräsvorgänge erzeugt werden.

Besonders vorteilhaft kann allerdings, insbesondere wenn der Träger aus einem Schaumwerkstoff besteht, die Profilierung mit hervorragender Wiederholgenauigkeit, in kurzer Zeit und wirtschaftlich dadurch bewirkt werden, dass ein Prägestempel bzw. eine Prägeplatte verwendet wird, die auf die herzustellende bzw. zu profilierende Sichtfläche des Trägers gepresst wird. Durch die Verwendung eines Schaumwerkstoffs kann der Träger problemlos dementsprechend komprimiert werden, dass er die gewünschte Profilierung annimmt. Der Erfolg des Prägevorgangs kann insbesondere dadurch verbessert werden, dass der Prägevorgang bei Temperaturen erfolgt, die höher als die übliche Raumtemperatur von z. B. 20°C liegen. Beispielsweise kann eine beheizte Prägeplatte verwendet werden.

Vorteilhaft kann nicht nur die zum Fenster gerichtete Sichtseite des Trägers profiliert sein, sondern beide Sichtseiten des Trägers können profiliert sein. Die nach innen gerichtete Sichtseite kann glatt sein und beispielsweise mit einem Furnier oder einer bedruckten Folie versehen werden, um so eine gewünschte optische Ausgestaltung dieser inneren Sichtseite in Anpassung an den übrigen Innenausbau des Sargraums zu bewirken. Die Möglichkeiten unterschiedlicher optischer Ausgestaltungen dieser inneren Sichtseite können auf technisch einfache und wirtschaftliche Weise durch die entsprechende Profilierung der inneren Sichtseite erweitert werden.

Dabei kann grundsätzlich vorgesehen sein, dass beide Seiten gleichartig profiliert sind, beispielsweise den gleichen Faltenwurf zeigen, so dass hierdurch der Eindruck einer echten, gespannten Gardine unterstützt werden kann. Vorteilhaft jedoch kann vorgesehen sein, dass die beiden Sichtseiten unterschiedlich profiliert sind, so dass auf der Innenseite eine Profilierung vorgesehen sein kann, die beispielsweise bewusst von einem textilen Erscheinungsbild abweicht.

Daher kann vorgesehen sein, dass vorteilhaft beide Sichtseiten mit unterschiedlich ausgestalteten Oberflächenschichten versehen sind, so dass beispielsweise dem Fenster zugewandt eine textilartige Optik vorgesehen ist, während zum Innenraum hin die Sichtseite mit einem Holzfurnier oder einer bedruckten Folie versehen sein kann, um die entsprechende optische Ausgestaltung des Innenraums auch an der Innenseite des Gardinenträgers aufzugreifen.

Der Gardinenträger kann vorteilhaft dadurch weitergebildet werden, dass er an eine separate Bodenleiste grenzt, die unten an den Gardinenträger angrenzt. Die Herstellung und die Nutzung des Gardinenträgers ist auf diese Weise besonders einfach und wirtschaftlich möglich. Hierdurch wird nämlich eine schnelle Montage des Gardinenträgers ermöglicht, so dass der Innenausbau eines Bestattungsfahrzeugs wirtschaftlich vorteilhaft beeinflusst wird, nämlich durch kurze Montagezeiten und dadurch, dass vergleichsweise wenige Bauteile erforderlich sind.

In einer ersten Ausgestaltung kann eine besonders vorteilhaft schnelle und präzise Montage des Gardinenträgers dadurch erfolgen, dass dieser einfach in die Bodenleiste eingesteckt wird. Zu diesem Zweck weist die Bodenleiste Ausnehmungen auf, und der Gardinenträger an seiner Unterkante nach unten ragende Laschen, die mit den Ausnehmungen der Bodenleiste korrespondieren, so dass der Gardinenträger mit seinen Laschen einfach in die Ausnehmungen der Bodenleiste eingesteckt werden kann und auf diese Weise präzise in seiner gewünschten Lage fixiert ist.

Wenn die textile optische Anmutung des Gardinenträgers durch eine Beflockung der profilierten Oberseite des Gardinenträgers bewirkt wird, ist in der Praxis nicht auszuschließen, dass sich von dieser Beflockung innerhalb eines bestimmten Zeitraums eine gewisse Anzahl von Flockfasern löst, die dann vom Gardinenträger nach unten rieselt. Angesichts der sehr großen Gesamtzahl an Flockfasern, welche die Beflockung des Gardinenträgers insgesamt ausmacht, ist dieser Anteil an nach unten rieselnden Flockfasern vernachlässigbar gering und beeinträchtigt insbesondere die optische Erscheinung der beflockten Sichtfläche des Gardinenträgers nicht nachteilig. Die unten auf der Bodenleiste aufliegenden, herabrieselten Flockfasern können allerdings als optisch störend empfunden werden, was eine regelmäßige Reinigung der Bodenleiste erfordern würde. Vorteilhaft kann daher vorgesehen sein, dass die Bodenleiste an ihrer Oberseite ebenfalls mit einer Beflockung versehen ist, wobei diese Beflockung gleichartig ausgestaltet ist wie die Beflockung auf der Sichtseite des Gardinenträgers. Auf diese Weise werden die von dem Gardinenträger herabrieselten Flockfasern auf der Bodenleiste optisch unauffällig und somit praktisch unsichtbar.

## Patentansprüche

1. Gardinenträger eines Bestattungsfahrzeugs,
mit einem formstabilen, als Träger bezeichneten Flächenelement, welches zwei gegenüberliegende Sichtflächen und eine umlaufende Kante aufweist,
und mit einer als Gardine bezeichneten, einen Faltenwurf darstellenden Oberflächenschicht,
wobei der Träger eine dreidimensional geformte Sichtfläche mit einer an den dargestellten Faltenwurf angepassten Profilierung in der Art aufweist, dass sich aufgrund der dreidimensionalen Profilierung die typische Optik des gewünschten Faltenwurfs aufgrund der Licht- und Schattenwirkung ergibt,
**dadurch gekennzeichnet,**
**dass** die Sichtseite des Gardinenträgers aus einem einzigen Träger gebildet wird, der als Platte ausgestaltet ist.

2. Gardinenträger nach Anspruch 1,
**dadurch gekennzeichnet,**
**dass** die Oberflächenschicht als Beflockung ausgestaltet ist.

3. Gardinenträger nach Anspruch 1 oder 2,
**dadurch gekennzeichnet,**
**dass** der Träger aus einem Schaumwerkstoff besteht.

4. Gardinenträger nach Anspruch 3,
**dadurch gekennzeichnet,**
**dass** der Träger als Hartschaumplatte ausgestaltet ist.

5. Gardinenträger nach Anspruch 3 oder 4,
**dadurch gekennzeichnet,**
**dass** die mit der Oberflächenschicht versehene Sichtseite des Trägers durch einen Pressvorgang profiliert ist.

6. Gardinenträger nach einem der vorhergehenden Ansprüche, **dadurch gekennzeichnet,**
**dass** beide Sichtseiten des Trägers profiliert sind.

7. Gardinenträger nach Anspruch 6,
**dadurch gekennzeichnet,**
**dass** die beiden Sichtseiten unterschiedlich profiliert sind.

8. Gardinenträger nach Anspruch 6 oder 7,
**dadurch gekennzeichnet,**
**dass** beide Sichtseiten mit unterschiedlich ausgestalteten Oberflächenschichten versehen sind.

9. Gardinenträger nach Anspruch 2,
**dadurch gekennzeichnet,**
**dass** die Beflockung sich auch über die Kante erstreckt.

10. Gardinenträger nach einem der vorhergehenden Ansprüche, **dadurch gekennzeichnet,**
**dass** unten an den Gardinenträger eine Bodenleiste grenzt.

11. Gardinenträger nach den Ansprüchen 2 und 10,
**dadurch gekennzeichnet,**
**dass** die Bodenleiste an ihrer Oberseite mit einer gleichartigen Beflockung versehen ist wie der Gardinenträger.

12. Gardinenträger nach Anspruch 10 oder 11,
**dadurch gekennzeichnet,**
**dass** der Gardinenträger an seiner Unterkante nach unten ragende Laschen aufweist,
wobei sich die Laschen in korrespondierende Ausnehmungen erstrecken, die in der Bodenleiste vorgesehen sind.

## Claims

1. Curtain holder of a hearse having a dimensionally stable surface element designated holder which surface element incorporates two opposing visible areas and an edge running all the way round it, and having a surface layer designed to look like drapery folds and designated curtain, where the holder incorporates a three-dimensionally shaped visible surface having profiling adapted to the drapery folds in such a way that because of the three-dimensional profiling the desired drapery folds derive their typical appearance from the effect of light and shade, **characterised in that** the visible side of the curtain holder is formed from a single holder designed as a sheet.

2. Curtain holder in accordance with claim 1, **characterised in that** the surface layer is designed to look like a flock finish.

3. Curtain holder in accordance with claim 1 or 2, **characterised in that** the holder is made from a foam material.

4. Curtain holder in accordance with claim 3, **characterised in that** the holder is designed as a hard-foam sheet.

5. Curtain holder in accordance with claim 3 or 4, **characterised in that** the holder's visible side provided with the surface layer is shaped by a compression process.

6. Curtain holder in accordance with any one of the foregoing claims, **characterised in that** both visible sides of the holder are profiled.

7. Curtain holder in accordance with claim 6, **characterised in that** the two visible sides are differently profiled.

8. Curtain holder in accordance with claim 6 or 7, **characterised in that** the two visible sides are provided with differently designed surface layers.

9. Curtain holder in accordance with claim 2, **characterised in that** the flock finish also extends over the edge.

10. Curtain holder in accordance with any one of the foregoing claims, **characterised in that** a bottom strip abuts the curtain holder at the bottom.

11. Curtain holder in accordance with claims 2 and 10, **characterised in that** the bottom strip is provided on its upper side with the same kind of flock finish as the curtain holder.

12. Curtain holder in accordance with claims 10 or 11, **characterised in that the** curtain holder incorporates at its lower edge projecting pieces that extend downwards and fit into corresponding recesses provided for in the bottom strip.

## Revendications

1. Support de rideau pour un véhicule funéraire, comprenant un élément surface de forme stabe appelé «support» qui présente deux surfaces visibles se faisant face et une arête périphérique, et comprenant une couche superficielle appelée « rideau » et représentant un drapé, sachant que le support présente une surface visible de forme tridimensionnelle avec profilage adapté au drapé représenté, de sorte qu'en raison du profilage tridimensionnel l'aspect typique du drapé souhaité résulte des effets de la lumière et de l'ombre, **caractérisé en ce que** le côté visible du support de rideau est formé par un support unique configuré sous forme de plaque.

2. Support de rideau selon la revendication 1, **caractérisé en ce que** la couche superficielle est configurée en flocage.

3. Support de rideau selon la revendication 1 ou 2, **caractérisé en ce que** le support se compose d'un matériau mousse.

4. Support de rideau selon la revendication 3, **caractérisé en ce que** le support est configuré sous forme de panneau de mousse dure.

5. Support de rideau selon la revendication 3 ou 4, **caractérisé en ce que** le côté visible du support doté de la couche superficielle est profilé au cours d'une opération de compression.

6. Support de rideau selon l'une des revendications précédentes, **caractérisé en ce que** les deux côtés visibles du support sont profilés.

7. Support de rideau selon la revendication 6, **caractérisé en ce que** les deux côtés visibles sont profilés différemment.

8. Support de rideau selon la revendication 6 ou 7, **caractérisé en ce que** les deux côtés visibles sont dotés de couches superficielles différemment configurées.

9. Support de rideau selon la revendication 2, **caractérisé en ce que** le flocage s'étend aussi sur l'arête.

10. Support de rideau selon l'une des revendications précédentes, **caractérisé en ce qu'**en bas le support de rideau est délimité par une plinthe.

11. Support de rideau selon les revendications 2 et 10, **caractérisé en ce que** le dessus de la plinthe est doté d'un flocage du même type que sur le support de rideau.

12. Support de rideau selon la revendication 10 ou 11, **caractérisé en ce que** le support de rideau présente sur son arête inférieure des pattes faisant saillie vers le bas, sachant que les pattes s'étendent dans des évidements qui les épousent, prévus dans la plinthe.
